# EUROPEAN PATENT APPLICATION

(11) **EP 1 463 285 A2**
(43) Date of publication of application: **29.09.2004**
(21) Application number: 04006466.9
(22) Date of filing: 18.03.2004
(51) Int. Cl.: H04N 1/00

(54) **Image processing apparatus and method, and reading apparatus, and preview image display method**

(30) Priority: 24.03.2003 JP 2003079513
(71) Applicant: KONICA MINOLTA HOLDINGS, INC., Tokyo 100-0005 (JP)
(72) Inventor: Nomura, Shoichi, c/o Konica Photo Imaging, Inc., Hachioji-shi, Tokyo, 192-8505 (JP); Haraguchi, Tsuyoshi, c/o Konica Minolta Med. & Gra, Tokyo, 163-0512 (JP); Hoshino, Masahide, c/o Konica Minolta Photo Imag., Hachioji-shi, Tokyo, 192-8505 (JP)
(74) Representative: Gille Hrabal Struck Neidlein Prop Roos

(57) **Abstract**

An image of the information of a plurality of images is obtained from each kind of image information source, and the plurality of images are arranged and displayed on the preview screen, the image quality adjustment is conducted for each image.

## Description

### BACKGROUND OF INVENTION

The present invention relates to an image processing technology by which the image information obtained by the document reading, the image information obtained from the outside through a communication means, or the image information obtained from each kind of recording medium is processed and displayed, and recorded in the recording medium.

An apparatus by which the document is placed on the document table, scanned and an image is obtained, and the copied image is obtained, is commonly spread. A case is common in which these apparatus have a reading range larger than a generally used document size because it is necessary that they cope with various copy documents.

Accordingly, a copier in which the arrangement position of the document corresponding to the copy size is previously determined, is commonly spread.

On the one hand, a high image quality full-color printer by which the copy processing of a nature image such as, particularly, a color photograph can be conducted, appears, and a service by which a copy print is produced from a photographic print, also begins. In a case of these photographic documents, there are many cases, different from the character information, in which whole the image has a meaning, further, because there are almost all cases in which the document size is also smaller than the ordinal character document, it is necessary that the information of the photographic document is finely positioned in the copy print without a position being dislocated. Then, it is necessary that the color tone as the color photograph is preferably reproduced.

Accordingly, an apparatus by which the image document is pre-scanned and the preview information is obtained, and this is displayed on a monitor and the position of the document is designated, and the color adjustment is conducted, and a method are necessary. As an example of the corresponding document, in a Patent Document 1, the method by which the pre-scan image is displayed and the image area is cut-out, is introduced in detail.

Further, in Patent Document 2, it is disclosed that, when the pre-scan image is displayed, by displaying a specific background color on the back, the matching property of a print with the monitor is increased, and the color adjustment of the high image quality can be conducted.

When these photographic copy services are conducted as a job, it is necessary that an effective working is conducted. In correspondent to this, in Patent Document 3, a method by which a plurality of photographs are arranged on the document table, and by 1 time scanning, the reading of a plurality of photographic documents is conducted, is introduced.

### [Patent Document 1]

Tokkai-2000-332966

### [Patent Document 2]

Tokkaihei-10-145582

### [Patent Document 3]

Tokkai-2001-167271

Hereupon, in more recent years, there is also the image processing to conduct high degree processing, and an output service, such as each kind of value-added print in which a plurality of images are made layout on 1 photographic print, and printed, or by which a large amount of images are stored in the large capacity image recording medium such as CDR. In these cases, there is also a case where not only the copy image from the above document, but also an image obtained from a negative film, a digital image photographed by a digital still camera, further, a digital image on which each processing is conducted, are mixed and arranged.

In a layout print in which a plurality of kinds of images are mixed, it is of course that each mage is reproduced in the preferable color tone, however, respective unified feeling also become an important element as far as determination of the dignity of the layout print goes.

Further, also in an ordinary photographic copy service, there are not small cases where an order of a series of, a plurality of photographic documents is received, and for realizing a more preferable service, it is required that the color variation of the photographic document itself is adjusted, and the print making having the unified feeling is conducted.

However, in the method written in Patent Document 2, although the color tone of a single photograph can be preferably adjusted, it is not a method by which the unity feeling of a plurality of images can be adjusted, and it becomes a problem.

Further, relating to the efficiency in a case where these photographic copy service is conducted as the work, in the method in Patent Document 1, it is necessary that an individual work for each sheet of image is conducted, and there is a problem. According to the method in Patent Document 3, although the recording of a plurality of documents can be simultaneously conducted, it is not limited that all of the order of the copy print are copies from whole surface to whole surface, and there are many cases where a trimming method corresponding to the content of the order is necessary, and it is not always possible to obtain a sufficient effect.

Further, a method by which a plurality of photographic documents are arranged on a document table, is not described. In the photographic document, from the characteristic such as a fact that the physical property of the surface and rear surface is different, there are many cases in which some curl or concave and convex exist. Therefore, when it is placed on the document table, there are many cases in which it is moved or rotated by a slight force, and because it is difficult that documents are effectively aligned, the sufficient increase of the efficiency can not be expected.

### SUMMARY OF THE INVENTION

In view of such a situation, the present invention is attained, and the object of the present invention is provide a method and an apparatus by which the document copy operation with a good operating efficiency can be conducted. Then, further, an object is to provide a method by which a high-degree image output service in which a plurality of image media are correlated and processed, can be simply realized.

The above-described object is attained by the following inventions.
1. An image processing method which is characterized in that: an image of obtained input image information is displayed on the first preview image screen on which a plurality of areas can be set, and set plurality of areas are cut out, and the cut-out plurality of areas are arranged and displayed on the second preview image screen.
2. The image processing method according to 1, wherein the image processing is conducted according to different image quality adjustment value on the individual image information in the plurality of areas displayed on the second preview image screen.
3. The image processing method according to 1 or 2, wherein the plurality of image areas can be set by overlapping.
4. The image processing method according to any one of 1 - 3, wherein the second preview image screen can arrange and display an image of the image information different from the input image information, in addition to the image of the area which is cut out from the image displayed on the first preview image screen.
5. The image processing method according to any one of 1 - 4, wherein the third preview image screen on which a plurality of images are displayed in parallel, is displayed, and from the displayed plurality of image screens, the image is selectively designated and cut out, and the selected image is displayed on the second preview image screen in addition to the plurality of areas.
6. An image processing method which is characterized in that: the image information of a plurality of input units is obtained, and a plurality of images are displayed on one image screen, and the image processing can be conducted according to the different adjustment value on each of the image information of the displayed plurality of images.
7. The image processing method according to 6, wherein the image information of the adjusted plurality of images is stored in a single image recording medium.
8. An image processing method which is characterized in that: in the image processing method by which the obtained input image information is displayed on the image screen, the rectangle is defined, and an area whose shape is similar to the rectangle, and whose dimension is different from it, is designated, and the trimming processing is conducted, the origin for adjusting the dimension of the area can be designated to any one of each of apexes of the rectangle and the center of gravity of the rectangle.
9. An image processing method which is characterized in that: in the image processing method by which the obtained input image information is displayed on the image display means, a predetermined shape is defined, and an area whose shape is similar to the defined shape, and whose dimension is different from it, is designated, and the trimming processing is conducted, the origin for adjusting the dimension of the area can be designated to any one of each of apexes of the rectangle which circumscribes the shape, and the center of gravity of the rectangle.
10. An image processing method which is characterized in that: in the image processing method by which the obtained input image information is displayed on the image screen, the rectangle is defined, the trimming area is set by rotating the rectangle, and the trimming processing is conducted, the origin for rotating the area can be set to any one of each of apexes of the rectangle and the center of gravity of the rectangle.
11. An image processing method which is characterized in that: in the image processing method by which the obtained input image information is displayed on the image screen, a predetermined shape is defined, the trimming area is set by rotating the predetermined shape, and the trimming processing is conducted, the origin for rotating the area can be designated to any one of each of apexes of the rectangle circumscribing the shape and the center of gravity of the rectangle.
12. The image processing method according to any one of 8 - 11, wherein it has the first trimming area setting mode in which it is allowed that an area after the trimming processing protrudes from the existing area of the input image information, and the second trimming area setting mode in which it is restricted that an area after the trimming processing protrudes from the existing area of the input image information, and these 2 kinds of trimming area setting modes can be appropriately switched.
13. An image processing apparatus which is characterized in that: it has an image display means and an image processing means, and the image processing means displays an image of the obtained input image information, in a form in which a plurality of areas can be set, on the first preview image screen of the image display means, the set plurality of areas are cut out, and the cut-out plurality of areas are displayed in the arrangement, on the second preview image screen of the image display means.
14. The image processing apparatus according to 13, wherein the image processing is conducted on respective image information of the plurality of areas displayed on the second preview image screen, according to different image quality adjustment values.
15. The image processing apparatus according to 13 or 14, wherein the image processing means can set the plurality areas by overlapping.
16. The image processing apparatus according to any one of 13 - 15, wherein the image processing means arranges and displays the image of the image information different from the input image information on the second preview image screen, in addition to the image of the area cut out from the image displayed on the first preview image screen.
17. The image processing apparatus according to any one of 13 - 16, wherein the image processing means displays the third preview image screen on which the plurality of images are displayed in parallel, on the image display means, selects and designates from the displayed plurality of image screens, and the image is cut out, and the selected image is displayed on the second preview image screen, in addition to the plurality of areas.
18. An image processing apparatus which is characterized in that: it has the image display means and image processing means, the image processing means obtains the image information of a plurality of input units and displays the plurality of images on one image screen of the image display means, and the image processing is conducted on each of the image information of the displayed plurality of images, according to the different adjustment values.
19. The image processing apparatus according to 18, wherein it has an image output means for storing the image information of the plurality of images in a single image recording medium.
20. An image processing apparatus which is characterized in that: in the image processing apparatus by which the obtained input image information is displayed on the image screen, the rectangle is defined, and an area whose shape is similar to the rectangle, and whose dimension is different, is designated, and in which it has the image processing means by which the trimming processing is conducted, the image processing means can designate the origin for adjusting the dimension of the area to either one of each of apexes of the rectangle or the center of gravity of the rectangle.
21. An image processing apparatus which is characterized in that: in the image processing apparatus having the image processing means by which the obtained input image information is displayed on the image screen, a predetermined shape is defined, an area whose shape is similar to the defined shape and whose dimension is different from it, is designated, and the trimming processing is conducted, the image processing means designates the origin for adjusting the dimension of the area to either one of each of apexes of the rectangle circumscribing the shape or the center of gravity of the rectangle.
22. An image processing apparatus which is characterized in that: in the image processing apparatus having the image processing means by which the obtained input image information is displayed on the image screen, the rectangle is defined, a trimming area is set by rotating the rectangle, and trimming processing is conducted, the image processing means sets the origin for rotating the area to either one of each of apexes of the rectangle or the center of gravity of the rectangle.
23. An image processing apparatus which is characterized in that: in the image processing apparatus having the image processing means by which the obtained input image information is displayed on the image screen, a predetermined shape is defined, a trimming area is set by rotating the predetermined shape, and trimming processing is conducted, the image processing means designates the origin for rotating the area to either one of each of apexes of the rectangle circumscribing the shape or the center of gravity of the rectangle.
24. The image processing apparatus according to any one of 20 - 23, wherein it has the first trimming area setting mode in which the area after the trimming processing can be set over the existing range of the input image information, and the second trimming area setting mode in which it is restricted that the area after the trimming processing protrudes from the existing range of the input image information, and 2 kinds of the trimming area setting modes can be appropriately switched.
25. An image processing program which is characterized in that: the image of the obtained image information is displayed on the first preview image screen in which a plurality of areas can be set, the set plurality of areas are cut out, and the cut out plurality of areas are displayed being arranged on the second preview image screen.
26. The image processing program according to 25, wherein the image processing is conducted on each of image information of the plurality areas displayed on the second preview image screen, according to different image adjustment values.
27. The image processing program according to 25 or 26, wherein the plurality of areas can be set by overlapping.
28. The image processing program according to any one of 25 - 27, wherein the second preview image screen can display the image of the image information different from the input image information by arranging, in addition to the image of the area cut out from the image displayed on the first preview image screen.
29. The image processing program according to any one of 25 - 28, wherein the third preview image screen on which a plurality of images are displayed in parallel, is displayed, the image is cut out by selecting and designating from the displayed plurality of image screens, and the selected image is added to the plurality of areas and displayed on the second preview image screen.
30. An image processing program which is characterized in that: a plurality of image information of input unit are obtained, a plurality of images are displayed on one image screen, and the image processing can be conducted on each of image information of the displayed plurality of images according to different adjustment values.
31. The image processing program according to 30, wherein the image information of the adjusted plurality of images are stored in a single image recording medium.
32. An image processing program which is characterized in that: in the image processing program by which the obtained input image information is displayed on the image screen, the rectangle is defined, and an area whose shape is similar to the rectangle, and whose dimension is different, is designated, and the trimming processing is conducted, the origin for adjusting the dimension of the area can be designated to either one of each of apexes of the rectangle or the center of gravity of the rectangle.
33. An image processing program which is characterized in that: in the image processing program by which the obtained input image information is displayed on the image display means, a predetermined shape is defined, and an area whose shape is similar to the defined shape, and whose dimension is different, is designated, and the trimming processing is conducted, the origin for adjusting the dimension of the area can be designated to either one of each of apexes of the rectangle circumscribing the shape or the center of gravity of the rectangle.
34. An image processing program which is characterized in that: in the image processing program by which the obtained input image information is displayed on the image screen, the rectangle is defined, the trimming area is set by rotating the rectangle, and the trimming processing is conducted, the origin for rotating the area can be set to either one of each of apexes of the rectangle or the center of gravity of the rectangle.
35. An image processing program which is characterized in that: in the image processing program by which the obtained input image information is displayed on the image screen, a predetermined shape is defined, a trimming area is set by rotating the predetermined shape, and the trimming processing is conducted, the origin for rotating the predetermined shape can be set to either one of each of apexes of the rectangle circumscribing the shape or the center of gravity of the rectangle.
36. The image processing program according to any one of 32 - 35, wherein it has the first trimming area setting mode which allows that the area after trimming processing protrudes from the existing range of the input image information, and the second trimming area setting mode which restricts that the area after trimming processing protrudes from the existing range of the input image information, and 2 kinds of trimming area setting modes can be appropriately switched.
37. An image reading apparatus which is characterized in that: in the image reading apparatus having the document table and document cover, the document cover has elasticity and plasticity, and mass per 100 cm² is not smaller than 15 g, and not larger than 100 g.
38. An image reading apparatus which is characterized in that: in the image reading apparatus having the document table and document cover, the document cover is formed of a plate-like member to which a plurality of joint portions are connected, and the plurality of joint portions can bend not smaller then ± 30° between terminals in the range separated by 10 cm of one direction, and the mass of the document cover per its 100 cm² is not smaller than 15 g and not larger than 100 g.
39. The image reading apparatus according to 37 or 38, wherein the document cover has a press cover formed of plate member having the rigidity to press the document.

Hereupon, the input unit in item 6, item 18 and item 30 means a bundle of image unit in an input image operation such as a kind of the image obtaining means for obtaining the input image information from each kind of image recording media or an image recording holder in which a series of images are recorded, and the photographic film (roll or cut piece) in which a series of images are recorded.

### BRIEF DESCRIPTION OF THE DRAWINGS

Fig. 1 is a block diagram of a digital mini-lab having an image processing apparatus according to an embodiment of the present invention.
Fig. 2 is a view showing an example of a reception image screen.
Fig. 3 is a view showing an example of the first preview image screen.
Fig. 4 is a view showing an example of the second preview image screen.
Fig. 5 is a view showing an example of the third preview image screen.
Fig. 6 is a view showing another example of the second preview image screen.
Fig. 7 is a flowchart of a program to conduct processes from a process of print copy, to a process in which the image information is obtained and outputted.
Fig. 8 is a flowchart of a program to conduct processes from a process in which the image information is obtained from the photographic film, to a process in which it is outputted.
Fig. 9 is a flowchart of a program to conduct processes from a process in which the image information is obtained from an each kind of medium, to a process in which it is outputted.
Fig. 10 is a view showing another example of the second preview image screen.
Fig. 11 is a view showing an example of the trimming processing accompanied by the enlargement/reduction, according to an embodiment of the present invention.
Fig. 12 is a view showing another example of the trimming processing accompanied by the enlargement/reduction, according to an embodiment of the present invention.
Fig. 13 is a view showing an example of the trimming processing accompanied by the rotation, according to an embodiment of the present invention.
Fig. 14 is a view showing another example of the trimming processing accompanied by the rotation, according to an embodiment of the present invention.
Fig. 15 is a view showing an example of the trimming processing to allow the image protrusion, according to an embodiment of the present invention.
Fig. 16 is a view showing a designation image screen of the image processing to allow the image protrusion.
Fig. 17 is a view showing the conventional image reading apparatus.
Fig. 18 is a view showing an example of an image reading apparatus according to an embodiment of the present invention.
Fig. 19 is a view showing another example of the image reading apparatus according to an embodiment of the present invention.
Fig. 20 is a view showing a joint portion of a platen cover.
Fig. 21 is a view showing another example of the image reading apparatus according to an embodiment of the present invention.

### DETAILED DESCRIPTION OF THE PREFERRED EMBODIMENT

For the embodiment of the present invention, an example of a digital mini-lab which is recently spread in a photo-shop, and by which, corresponding to the order from the customer, the image writing service into the recording media such as print or CDR is conducted, will be described below.

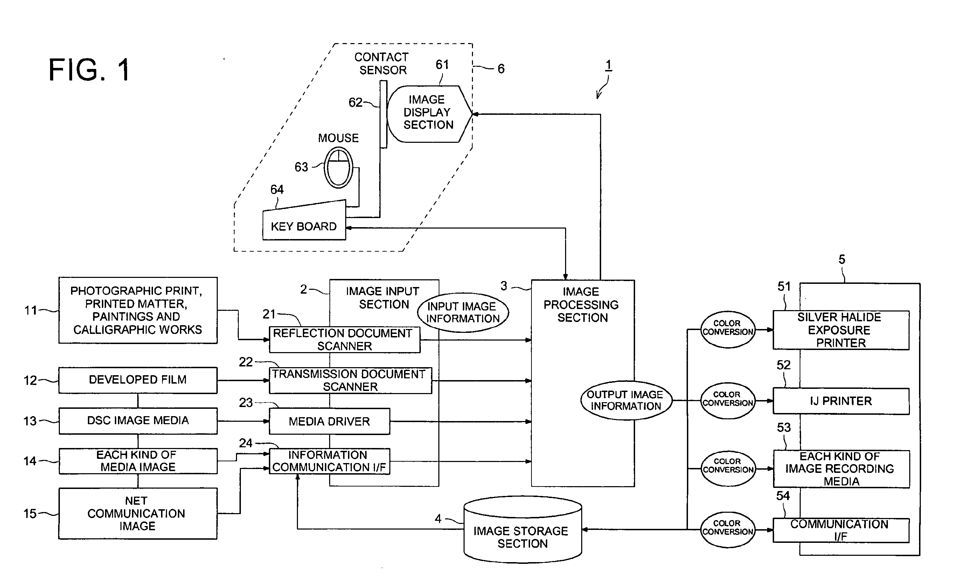

Fig. 1 is a block-diagram of a basic structure of a digital mini-lab provided with an image processing apparatus according to the embodiment of the present invention.

A digital mini-lab 1 having an image processing apparatus according to the embodiment of the present invention is structured, in the large classification, by an image obtaining section 2, image processing section 3 as an image processing means, image storage section 4, image output section 5 as an image output means, and an operation display section 6 as an image display means.

The image obtaining section 2 is structured by a reflection document scanner 21, transmission document scanner 22, media driver 23, and information communication interface 24.

The reflection document such as a photographic print, printed matter, painting and calligraphic works is read by the reflection document scanner 21, the photographic film such as negative film, and positive film is read by the transmission document scanner 22, the image information which is photographed by a digital still camera (hereinafter, called DSC) and stored in each kind of image recording media such as a smart media, or compact flash (R) is read by the media driver 23, and the image information transmitted through the internet or LAN or the image information stored in each kind of recording media such as DVD, CDR, or floppy (R) disk is read by respectively corresponding media driver, and obtained by the information communication interface 24 through a connection cable. Further, the information communication interface 24 obtains the image information from the image storage 4.

The reflection document scanner 21 is a well-known scanner by which, for example, several sheets - ten and several sheets of L size photographic print are placed on the document table, and can be read by the pre-scan of one time, and the images of a plurality of photographic prints read by the pre-scan are displayed at the arrangement as it is at which they are simultaneously read on the preview image display image screen SC20.

As described above, the image information obtained in the image obtaining section 2, is inputted into the image processing section 3, each kind of image processing is conducted, and it is stored in the image storage section 4, or printed or outputted to the outside, in the image output section 5.

The image information to the image output section 5 is the information on which the color conversion corresponding to the output destination is conducted, for example, so that the same color tone can be obtained also in different apparatus such as a silver-halide exposure printer 51 or inkjet printer 52, in the image processing section 3.

The designation starting from the condition for the image processing in the image processing section 3, is conducted by using a contact sensor 62, mouse 63 or key board 64 of the operation display section 6, and the image display, condition display of the apparatus, and each kind of alarm are conducted in an image display section 61.

The image output section 5 has a media recording apparatus to store in each kind of medium such as the silver halide exposure printer 51, inkjet printer 52 and DVD, CDR, and floppy (R) disk, and can output the image information as the print or image information. Further, it is transmitted to the outside from a communication interface 54.

The image processing section 3 adjusts each kind of the photographic characteristic such as the gradation, color tone, chroma, and sharpness, further, each kind of image edit starting from the trimming is conducted, and it includes the program for adjusting each kind of edit which will be described later, or the photographic characteristic.

In the present invention, in the image obtaining section 2, the obtained image information is displayed on the preview image screen of the image display section 61, each kind of adjustment by the operation of the preview image screen is conducted, and the output of the image information such as the print or storage that it is stored in the storage media, is conducted.

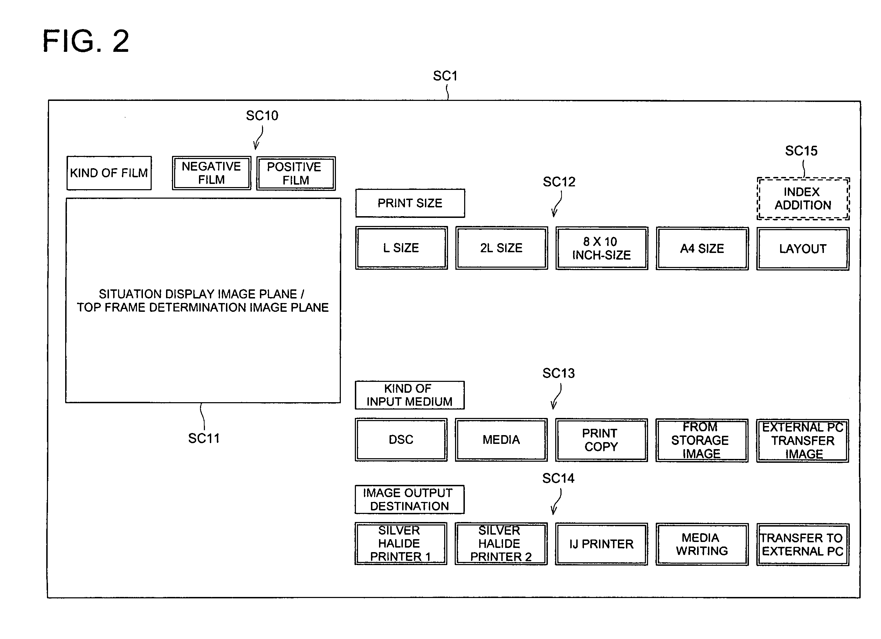

Fig. 2 shows a reception image screen displayed in the image display section 61. In the reception image screen SC1, initially, the condition display/top frame confirmation image screen SC11 is displayed, the printer is in stand-by condition, and the condition such as a situation whether the print operation can be conducted, or the communication line is connected, is displayed on this image screen.

On the reception image screen SC1, a designation button SC10 of the kind of film for designating a difference of the negative film/positive film, designation button SC12 of the print size from size L to size A4, designation button SC15 of the index print addition, and designation button SC13 for designating the obtaining destination of the input image information, that is, DSC, print or copy (print image), storage media such as DVD, CDR, storage image from the image storage section 4, or outside PC, and designation button SC14 for designating the output destination of the image, that is, silver halide printer 51, inkjet printer 52, or each kind of storage media 53, are displayed.

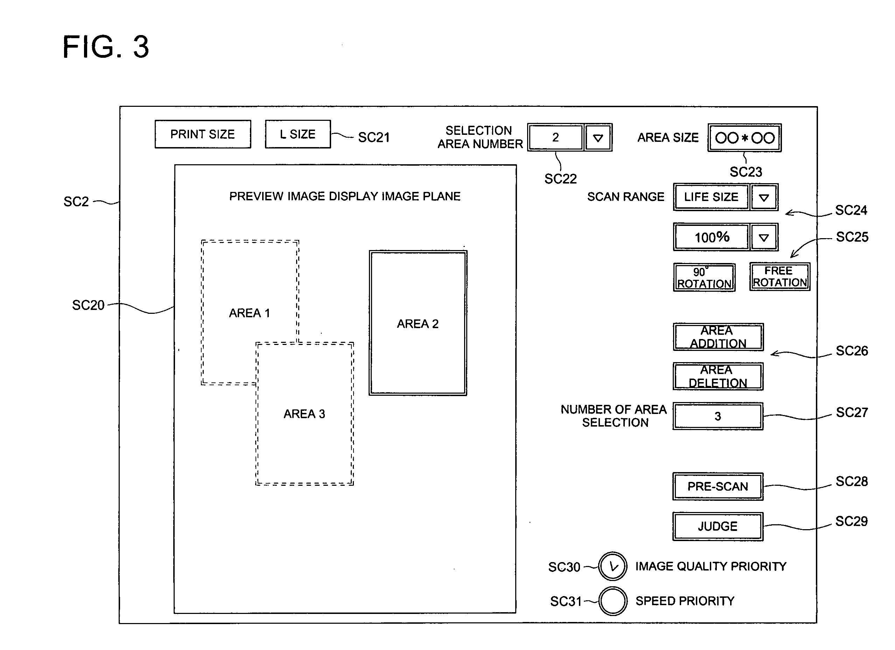

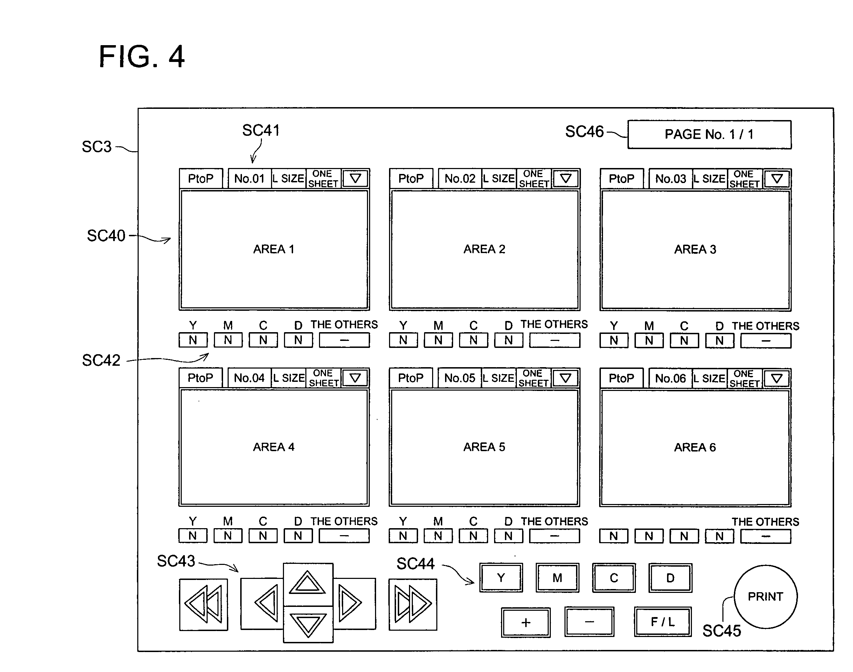

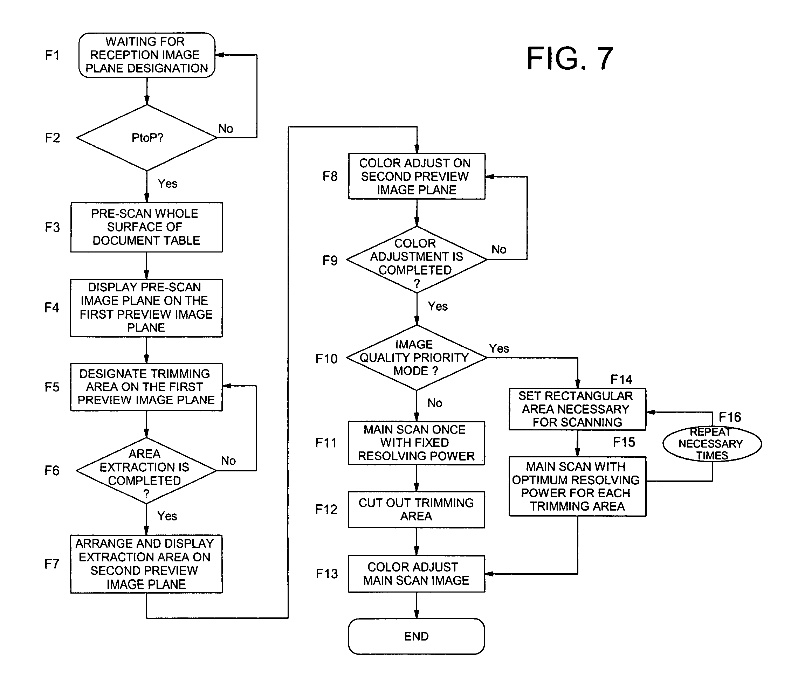

By Fig. 3 showing the first preview image screen displayed in the image display section 61, Fig. 4 showing the second preview image screen, and Fig. 7 showing the flowchart of the program for conducting a process for reading the print image and conducting the image output such as the print, a process from the reading of the print image to the output of the image information, will be described below.

In the reception image screen SC1 in Fig. 2, when, from the situation of input-waiting, P to P, that is, the print copy button in the designation button SC 13 of the input media for designating a mode in which the image is picked from the reflection document such as a photograph, image processed and the print image is outputted, is clicked (F1, F2), the first preview image screen SC2 in Fig. 3 is opened.

On the preview image display image screen SC20 of the first preview image screen SC2, a pre-scanned image is displayed.

In the first preview image screen SC2, a desired image is selected and designated from a plurality of print images, and a plurality of desired area is designated from a print image on one frame, and the print designation can be conducted.

That is, when a pre-scan button SC28 is pressed, and the pre-scan is designated (F3), the reflection document scanner 21 pre-scans the document, and the image of the scanned document is displayed on the preview image display image screen SC20 (F4).

On the preview image display image screen SC20, an area 1 is displayed. Herein, the area is defined as the rectangle having a predetermined aspect ratio, and can be freely moved by the operation of the mouse 63 or key board 64 in Fig. 1, and a size can be freely changed. The area 1 is moved and put on a desired image, and the trimming area is set. In the shown example, the area to be trimmed is defined as the rectangle having a predetermined aspect ratio, and the operator can move the rectangle by operating the mouse 63 or key board 64, and put on a desired image, however, it is also possible that the shape, rotation can be arbitrarily designated. The size of the area is displayed on an area size display section SC23, further, the magnification when the trimmed image is outputted, can be designated by a magnification button SC24, and a posture of the print image can be designated by operating a 90° rotation button or free rotation button by a rotation button SC25.

That is, the trimming frame is rotated with 90° unit per each press of 90° rotation button. When the trimming frame is the rectangle, the frame in which the aspect ratio of the rectangle changes place, can be set. When the free rotation button is pressed, the rectangle frame can be rotated to an arbitrary angle by using, for example, the mouse, and the free angle setting can be conducted. The details will be described later.

In the case of the area designation, the SC30 and SC31 are an image quality designation button for designating the image quality, and can designate the image quality preference or speed preference. The image quality designation will be described later.

When the designation of the area 1 is completed, the area addition button SC26 is pressed, and the area 2 is displayed on the preview image display image screen SC20, and the above-described area is designated (No of F6, F5). Such an operation is repeatedly conducted, and a plurality of areas can be designated. When the designation of a desired area is completed, a judge button SC29 is clicked (Yes of F6) .

Hereupon, in the area designation, the number of area in the designation operation is displayed on the selection area display section SC22, and the total number of the designations is displayed on an area selection number display section SC 27.

Further, the area 1 - n, for example, as the shown area 1 and 3, can be designated in such a manner that the areas are overlapped. In fact, in the preview image display image screen SC20 on the first preview image screen SC2, displays a print image on one frame, and a plurality of desired area in the print image on one frame can be trimming.

On the first preview image screen SC2, when the judge button SC29 is clicked, it is switched to the second preview image screen in Fig. 4 (F7).

On the second preview image screen SC3, areas 1 - n (1-6 in the view) cut out on the first preview image screen SC2 are displayed as areas 1 - n of a pre-scan image SC40. Hereupon, when the pre-scan image SC40 can not be displayed on a sheet of second preview image screen, it is displayed by being divided on several sheets of preview image screens, and how many sheets of total are there as the preview image screen, and what number sheet is displayed, are displayed on the display section SC46.

In the pre-scan image SC40, the designation such as the respective image adjustment, print size designation can be conducted. That is, by operating a cursor button SC43, a desired image is selected from the area 1 - n, by operating the size/number of sheets designation button SC41, the print size and number of sheets such as, for example, size L, one sheet, are designated, and by operating an image quality adjustment button SC44, the image quality can be adjusted. The image quality adjustment button is structured in such a manner that the designation of + (plus) or - (minus) can be conducted for each of Y, M, C, D, and the adjusted value is displayed on the display section SC42 for each of Y, M, C, D.

As described above, when the area on which various trimming designations are conducted on the first preview image screen SC2, is displayed on the second preview image screen SC3 by being arranged in the same size, there is no case where it is influenced by the image information outside the trimming area, and further, when each one of aligned and arranged images can be comparing-adjusted, the high quality and stable image adjustment can be simply conducted.

Hereupon, when respective print sizes (herein, aspect ratio) of images displayed on the second preview image screen SC3 are different, they can not be displayed as the same size image, however, in that case, the longitudinal or width sizes are arranged and when they are arranged and displayed as the almost same size, the sufficient adjustment can be conducted.

F/L on the image quality adjustment button SC44 is adjustment buttons called "F-key" and "L-key". Every when the F/L button is pressed once, the situation is repeatedly switched in a manner of "no function" → "function of F-key, ON" → "function of L-key, ON". The F-key and L-key are keys which are respectively normally used in the conventional negative film printer, and when the F-key is pressed, an image processing function for which the distortion correction of the color of the image photographed under the condition such as evening, cloud, or electric bulb illumination, is intensified, functions, and when the L-key is pressed, when, for example, the high chroma subject exists in the image, the image processing function for lightening the trouble in which the color tone of the whole image is varied by the influence of this subject, is functioned.

In "the other" on the display section SC42, the special image quality adjustment factor such as the sharpness, granularity, and chroma is displayed.

When above-described adjustment is conducted (F8) and the print button SC45 is clicked (Yes of F9), it is advanced to the print process, however, the print process is conducted by dividing into the image quality priority mode or speed priority mode (F10).

These modes are selected according to the operation of the image quality priority mode button SC30 in Fig. 3 or speed priority mode button SC31.

In the image quality priority mode (Yes of F10), the setting of the scan area is conducted (F14), the main scan is conducted with the preferable resolving power set for each trimming area, and when the main scan of the designated area is conducted (F14, F15, F16), the adjustment of the image quality is conducted for each designated area (F13), and completed. The preferable resolving power is set for each print size, and is automatically set corresponding to the selected print size. The adjustment of the image quality in step F13 is conducted according to the adjustment value designated in step F8.

In the case of the speed priority mode (No of F10), the whole images are main-scanned by fixed and constant resolving power (F11), the trimming image is cut out (F12), the image processing such as color adjustment is conducted (F13) for each cut-out image, and completed.

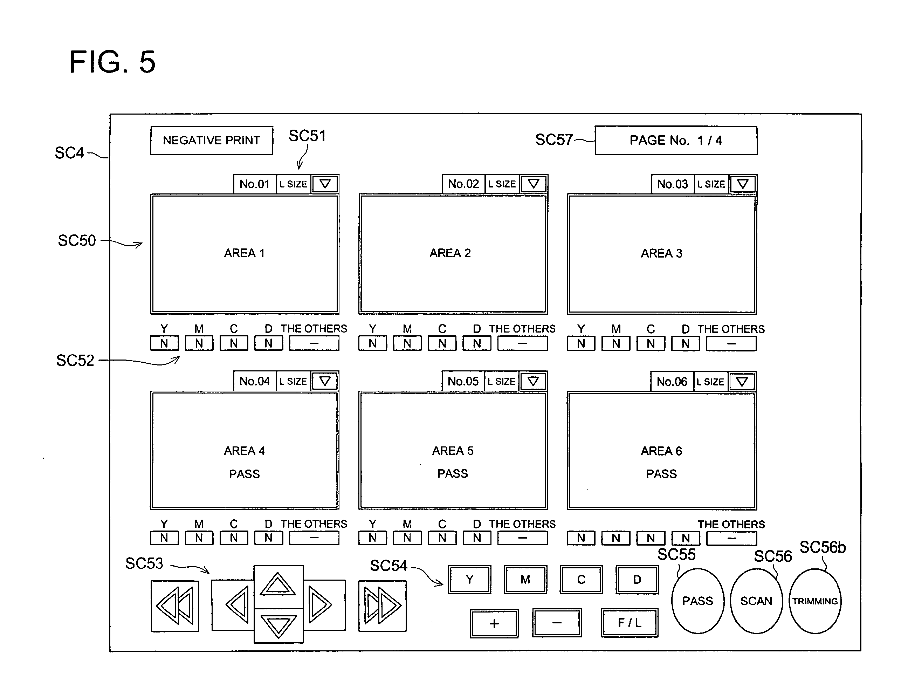

Fig. 5 shows the third preview image screen displayed on the image display section 61, when the negative film or positive film is read and the print is conducted. This image reading automatically starts (F21, F22) when, under the condition that the reception image screen SC1 shown in Fig. 2 is displayed, the film is inserted into the transmitted document scanner 22. As is well known, in the kind of film, there are the positive film and negative film, and this kind is previously set by the operation of the designation button SC10.

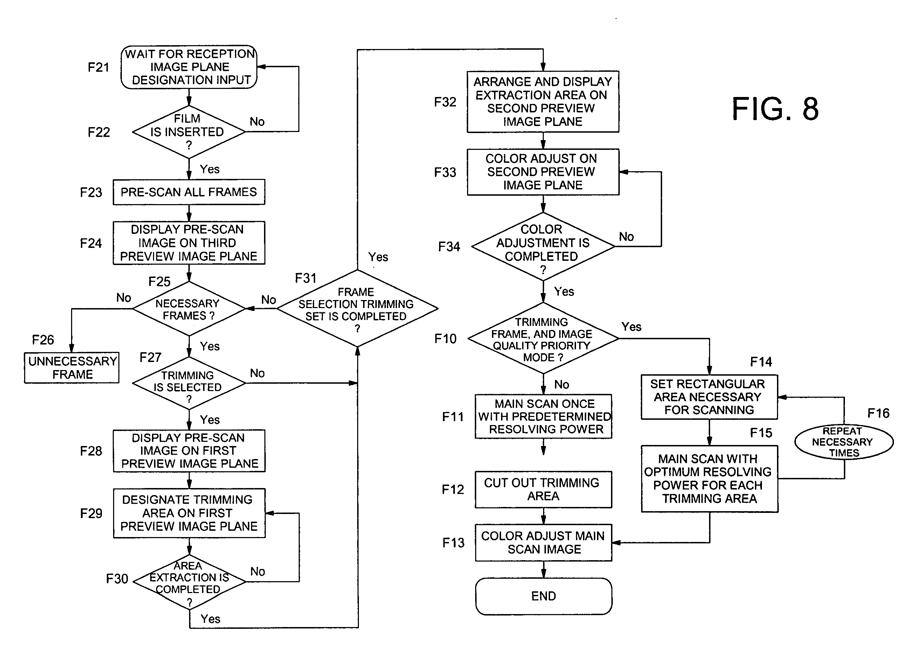

The print process in which the third preview image screen SC4 in Fig. 5 is used, is conducted according to the program shown in the flowchart of Fig. 8.

When the developed film is inserted into the transmission document scanner 22, the pre-scan of the film is conducted (F23) according to the kind of media (negative or positive film) designated by the designation button SC10 of the kind of film in the reception image screen SC1 in Fig. 2. When the pre-scan is completed, the third preview image screen SC4 in Fig. 5 is displayed (F24).

On the third preview image screen SC4, the image of each frame is displayed in the area 1 - n (in the view, 1 - 6) of the pre-scan image SC50. In this case, when images of the whole frames can not be displayed on one image screen, in the same manner as in the case of the second preview image screen SC3, what number image screen of the whole number of the image screens it is, is displayed in the display section SC 57. Further, in the same manner as the second preview image screen SC3, the size/sheets number designation button SC51, cursor button SC53, and image quality adjustment button SC54 are provided, the print size, number of print sheets and image quality can be designated, and the adjustment amount in the image adjustment is displayed on the display section SC52.

That is, the third preview image screen SC4 is displayed in F24, and when the operator moves the cursor to the desired frame, and the frame to be trimmed is selected by designating the trimming button SC56 (F25), the image of the selected frame is displayed on the first preview image screen SC2 in F2 (F28). An unnecessary image is designated when a PASS button SC55 is clicked, and unnecessary-processed (F26).

The designation of the above-described trimming area is conducted by using the displayed first preview image screen SC2 (F29), the trimming is completed by clicking the judge button SC29, and when all of the trimming and unnecessary image selection are completed (F30), the image screen is switched to the second preview image screen SC3, and the designated trimming areas are arranged and displayed (F32).

As described above, in step 32, the condition judgement whether the image selection and the trimming designation for the necessary frame are completed for all frames, is conducted, and because step is repeated until this condition becomes Yes, it is necessary that the selection information or the trimming area information of the image is held, however, because it is a well known technology for skilled persons, it is not shown herein.

In steps F33 and F34, the image quality adjustment for each trimming area and the selected image (not PASS frame)is conducted, and when the adjustment is completed, the sequence is advanced to the print process after F10. The print process after F10 is shown in Fig. 7.

On the third preview image screen SC4, images obtained from each kind of medium are displayed.

That is, other than the above-described photographic film, the image information obtained from each storage medium such as each image memory of DSC, DVD, CDR, floppy (R) disk, the external equipment such as a personal computer, or the outside through the communication line such as the internet, can be displayed. The designation of such a kind of image information is conducted by operating the designation button SC13 on the reception image screen.

On the third preview image screen SC4, images obtained from the photographic film are images of a roll of film, and images obtained from each kind of storage medium are images stored in a unit of holder or file, are displayed in parallel. When the number of displayed images exceeds the number for one image screen, they are displayed over several image screens, and on the display section SC57, total number of pages, and the display page number are displayed.

Hereupon, at the time of processing of these image sources, in the case where the trimming area designation is not necessary, or in the case where the necessary image is previously known by the file name or frame number of the film, when there is the selection image screen of the film number or file name instead of the third preview image screen SC4, the image processing of the present invention by using the second preview image screen SC3 can be realized.

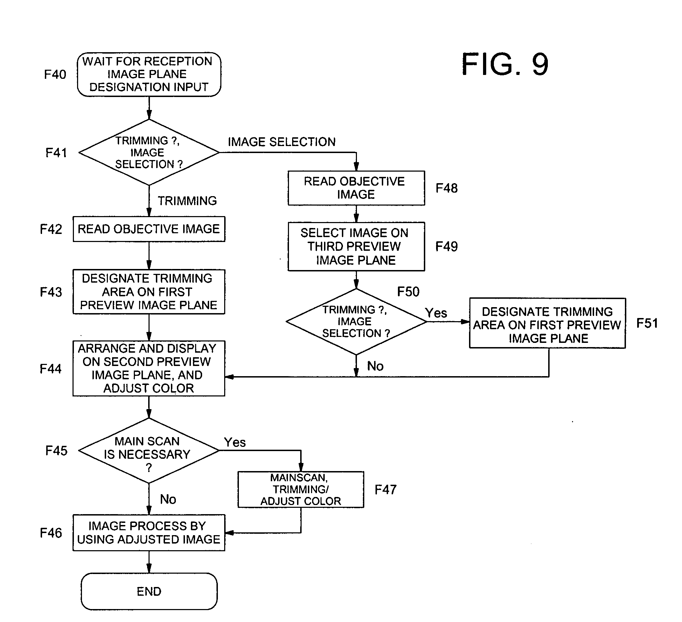

Fig. 9 is the flowchart of the program to conduct all processes by which the image information desired by the operator from the image information obtained from each kind of medium is selected, images are arranged and displayed, and after each kind of adjustment is conducted on each of images, and the print is conducted.

From the reception image screen SC1 in Fig. 2, the image to be trimmed is selected (F40, F41). The processing process is separated depending on whether the image to be trimmed is the image from the reflection document, that is, the image of photographic print or the other image, that is, the photographic film image, or the image from DSC or each kind of storage medium.

On the reception image screen SC1, the print copy is designated by the designation button SC13, and when the photographic print is selected (trimming of F41), the document reading is conducted by the reflection document scanner 21 in Fig. 1 (F42), and the image screen is switched to the first preview image screen SC2 in Fig. 3 (F43). In step F43, when the setting of the trimming area is conducted according to the above-described process, and the setting is completed, the image screen is switched to the second preview image screen, and images of the set trimming area are arranged and displayed (F44).

On the second preview image screen SC3, images obtained from each kind of medium are arranged and displayed. That is, in step F41, when the designation except the print copy is conducted by the designation button SC13, the object image is taken in (F48), and the sequence is advanced to step F49.

In step F48, the reading of the photographic film or the reading of the image information is conducted, and the read image is displayed on the third preview image screen SC4 (F49).

On the third preview image screen SC4, to select the print image, and to designate whether the trimming is conducted on the print image, are conducted. When no-trimming print is designated, the selected image is displayed on the second preview image screen SC3 (F50, F44), and when the trimming is designated, the selected image is displayed on the first preview image screen SC2. When the trimming area is designated (F51) on the first preview image screen SC2, and the setting is completed, the image of the designated trimming area is added to the second preview image screen SC3, and displayed (F44).

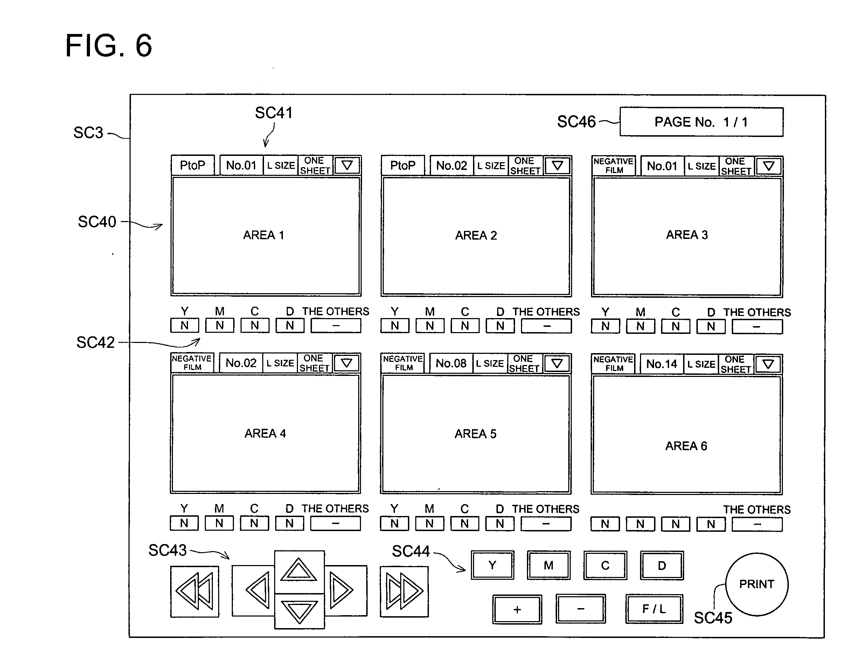

In Fig. 6, an example of the second preview image screen SC3 on which images obtained from each kind of image information source are arranged and displayed, is shown. On the second preview image screen SC3 shown in Fig. 6, images of the photographic print (P to P) are displayed in areas 1, 2, and images of the negative film are displayed in areas 3 - 6.

When the print button SC45 on the second preview image screen SC3 is clicked, the sequence enters into the print process, and initially, necessary/unnecessary of the main scan is checked (F45). In the case of the photographic print or the image information from the photographic film, that is, in the case of the image information obtained by the scan, the main scan is conducted (Yes of F45).

Then, on the image information obtained by the main scan, trimming or image adjustment according to the condition set by using the first, second preview image screen SC3 is conducted (F47). For the image information from DSC or storage medium, the main scan is unnecessary, the sequence directly advances from step F45 to F46, and the image processing is further conducted in F46, and the sequence ends.

In this manner, when, on the second preview image screen SC3, images obtained from a plurality of media are arranged and displayed, and the image quality is adjusted, it becomes possible that the image quality can be adjusted while each uniformity is estimated, for example, also by making a layout print structured by using these plurality of images, or an electronic album in which they are arranged and stored in the image recording device such as CDR, high uniformity and high quality image processing service can be realized.

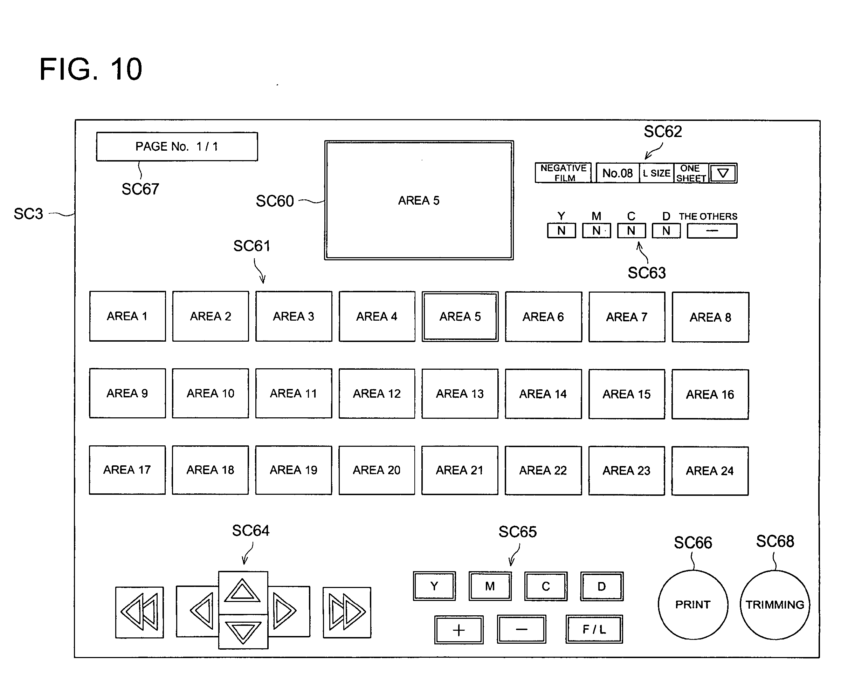

Fig. 10 shows another example of the second preview image screen. The example of Fig. 10 is structured so that more images can be arranged and displayed, and 24 pre-scan images SC61, for example, like as areas 1 - 24, are displayed.

In this manner, when many images are displayed, the image size of one sheet is reduced, however, the pre-scan image SC60 selected for the adjustment is displayed with a large size. For selected pre-scan image SC60, the designation button SC62 and the image quality adjustment button SC65 are provided, and the print size, number of print sheets, and image quality can be adjusted. SC66 is the print designation button, SC67 is page display section, and SC68 is the trimming designation button.

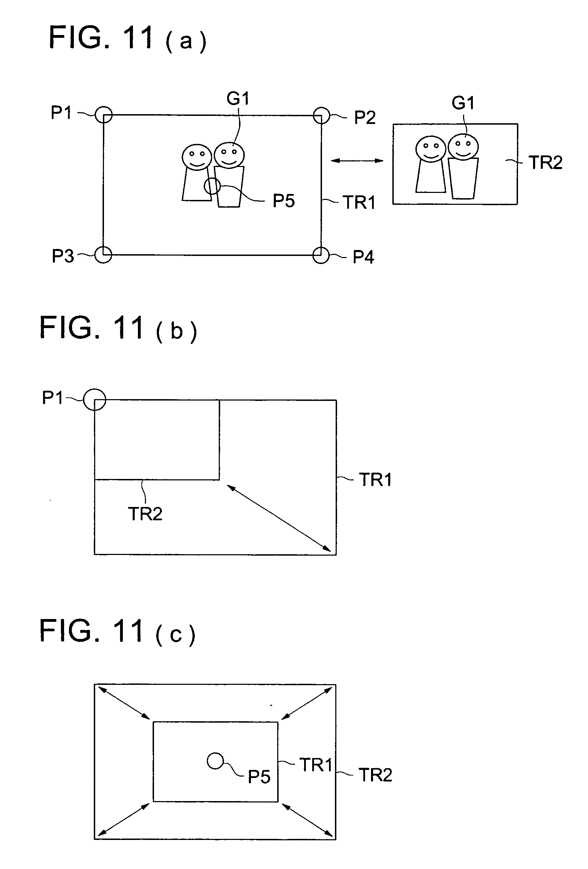

The present invention provides a setting means of a new trimming frame when the trimming is set. Fig. 11 shows an example of the setting method.

As shown in Fig. 11(a), the trimming area is set as the rectangular trimming area TR1 to extract a part of image G1, and the trimming frame is enlarged/reduced in the similar figure like as TR1 ↔ TR2.

In the enlargement/reduction, the position of the image and the trimming area after the enlargement/reduction processing is different depending on what position of the area is the origin.

In the mode of the present invention, the origin in the case of the enlargement/reduction of the trimming area can be set to either one of 4 apexes P1 - P4 of the rectangular trimming area or the center of gravity P5 of the rectangle. In Fig. 11(b), an example in which the left upper apex P1 of the rectangle is set as the origin and the area is enlarged/reduced, is shown, and in Fig. 11(c), an example in which the area is enlarged/reduced when the center of gravity P5 of the rectangle is made as the origin, is shown.

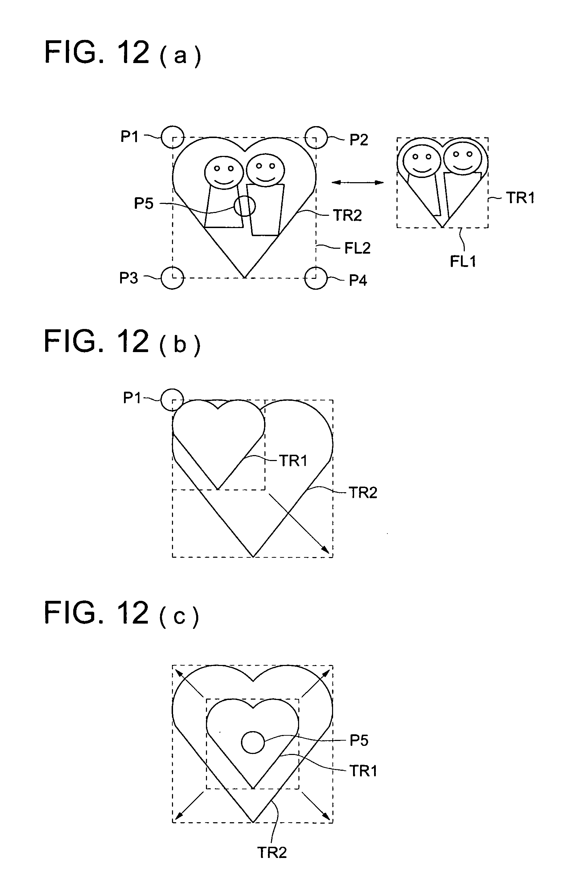

Fig. 12 shows another example of the method of the trimming frame setting. In Fig. 12, the rectangle FL1 circumscribing the heart shaped trimming area TR1 is set. The trimming area TR1 is previously registered as an area having a predetermined shape, and it can be selected from a plurality of kinds of registered figures. By using the circumscribing rectangle, in the same manner as described for Fig. 11, when either one of 4 apexes P1 - P4 of the rectangle FL1 or the center of gravity P5 is made as the origin, the enlargement/reduction can be conducted.

In Fig. 12(b), Fig. 12(c), an example in which left upper apex P1 and the center of gravity P5 of the rectangle are made as the origin, and the enlargement/reduction is conducted, is shown.

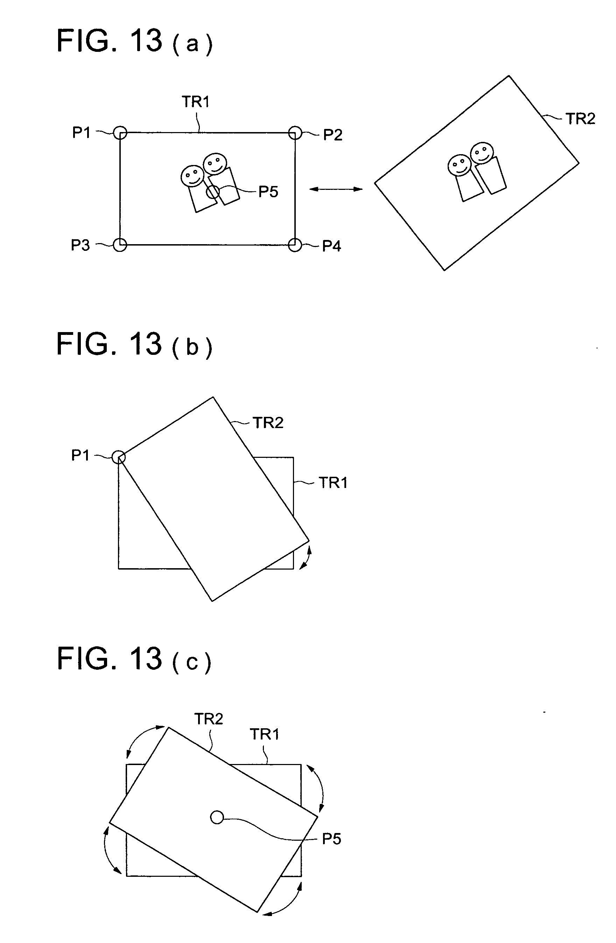

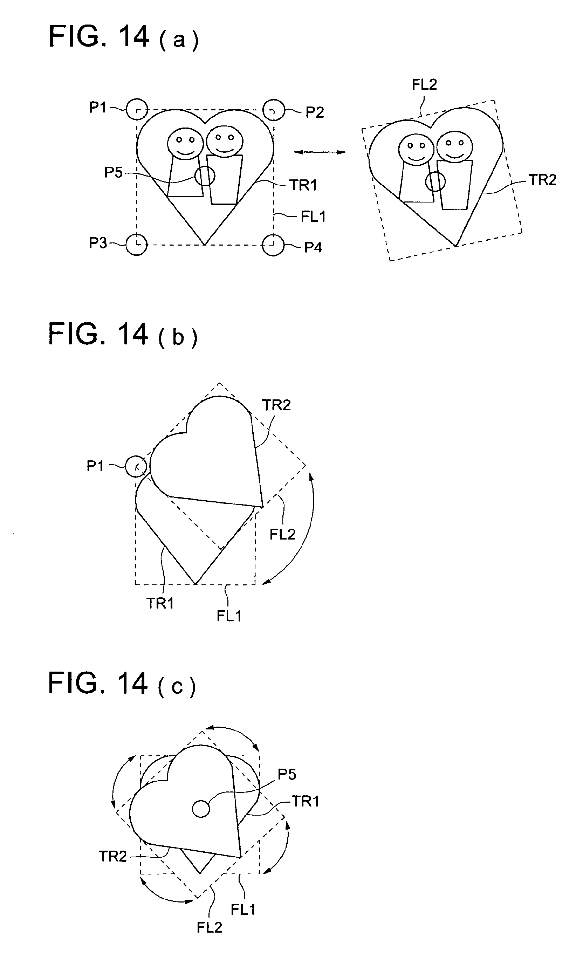

Fig. 13, Fig. 14 show an example of the method by which the trimming area is rotated. Fig. 13 is an example in which the trimming area is set so as to include a desired image, and the set trimming area TR1 is rotated as shown by TR2, and the origin of the rotation can be set to either one of 4 apexes P1 - P4 of the rectangular trimming area or the center of gravity P5. Figs. 13(b), (c) are examples in which the left upper apex P1 of the trimming area TR1, and the center of gravity P5 are respectively made as the origin, and the area is rotated.

In Fig. 14, the trimming area TR1 with a predetermined shape is set, and when the center of rotation is set to either one of 4 apexes P1 - P4 of the rectangle FL1 circumscribing the trimming area TR1 or the center of gravity P5, and the trimming area TR1 is rotated, the trimming area TR2 can be set. Figs. 14(b), (c) are examples in which the lest upper apex P1 of the rectangle FL1 and the center of gravity P5 are respectively made as the origin, and the area is rotated.

Further, the present invention provides a method by which the trimming can be conducted even when the trimming area protrudes to the outside of the existing area of the input image information. By such a setting method of the trimming area, an application range of the trimming method is enlarged, and the utility value is increased.

Although there is a case where the position of the trimming area is changed and protruded from the existing range of the image information by the enlargement or rotation of the image, in the embodiment of the present invention, a mode in which the protrusion is restricted, and a mode in which the protrusion is allowed and the protruded image is outputted as the print or image information, can be selected.

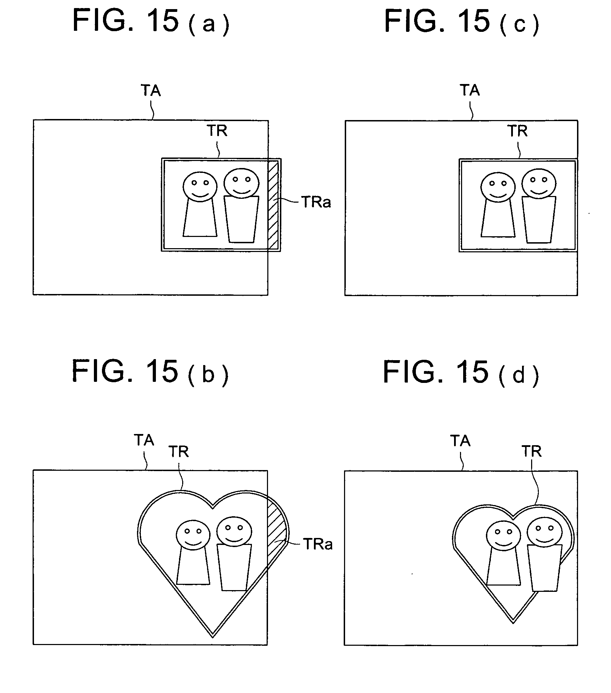

Fig. 15 is a conceptual view of the display in the case where the trimming area is set exceeding over the existing range of the image information.

Fig. 15(a) shows the image in a protrusion allowance mode. In this mode, for example, in the case where the image is enlarged, when the trimming area is protruded, the protruded rectangular trimming area TR as shown in the view is displayed in the image display section 61 (refer to Fig. 1). Fig. 15(b) is an example in which a heart shaped trimming area TR is protruded and displayed.

Figs. 15(a) and (b) are conceptual views of the display, and on the actually displayed image screen in the image display section 61, a protruded portion Tra of the trimming area TR is not displayed. Further, the image information of the protruded portion is not included in the output image information, however, in the output print, the protruded portion is formed as the image corresponding to the set condition as will be described later.

In the protrusion restriction mode, the trimming frame is enlarged or rotated until it reaches the border of the existing range of the image information in the enlargement processing or rotation processing, and at the time point at which it reaches the border, the image processing to stop the processing is conducted. Figs. 15(c), (d) show the trimming area TR enlargement processed to the allowance limit. Hereupon, the processing is stopped at the time point at which it reaches Figs. 15(c), (d). In this case, the alarm display may also be conducted.

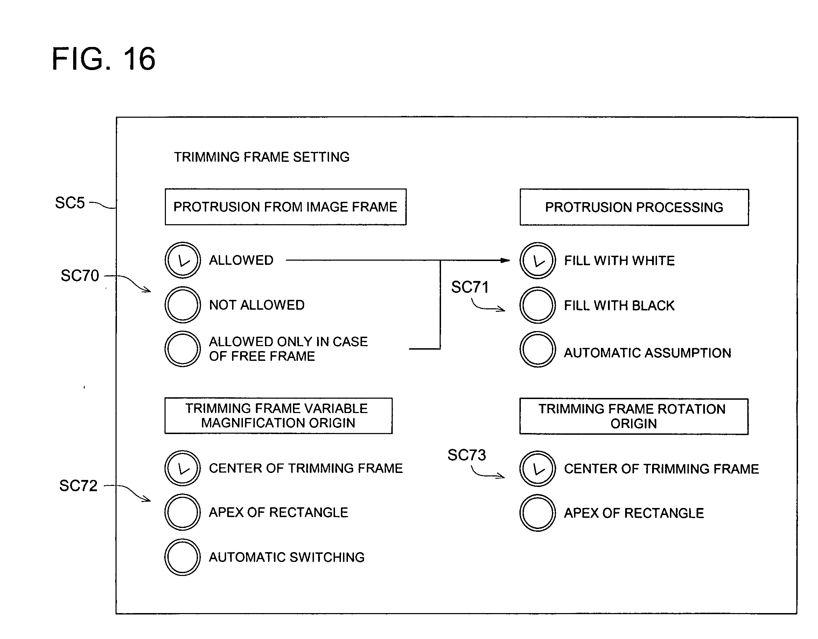

Fig. 16 shows an image screen for setting each kind of image processing shown in Figs. 11 - 15.

On the trimming setting image screen SC5, the protrusion setting section SC70, protrusion processing setting section SC71, variable magnification origin setting section SC72 and rotation origin setting section SC73 are provided.

In the protrusion setting section SC70, buttons in which the protrusion is "allowed", "not allowed", and "only in the case of free frame, allowed", are prepared, and the protrusion mode shown in Fig. 15 can be set. In "allowed", the protrusion is allowed even when the trimming area has any shape as shown in Fig. 15(a) or (b), in the "not allowed", the protrusion is not allowed even when it has any shape. In the " only in the case of free frame, allowed", protrusion is not allowed when the regular shaped rectangular trimming area is designated as shown in Fig. 15(b), however, as shown in Fig. 15(b), when the free frame except the rectangle is set, the protrusion is allowed.

That is, in the case of free frame, for the structural position of the image (trimmed) put in the frame, there are many cases where the limitation caused by the shape of the frame exists, when this condition is destroyed, there is a case where the trimming effect is extremely reduced, different from the case of the rectangle. By the present setting function, the processing against such a problem becomes possible.

In the protrusion processing setting button SC71, buttons for "filled with white", "filled with black", and "automatic assumption" are prepared, and it can be designated that the protrusion portion Tra in Fig. 15 is daubed with white color, daubed with black color, or automatically assumed.

In the "automatic assumption", for example, the daub processing by the assumption is conducted so that the color tone of the image of the area except the protrusion area Tra, and the texture are applied to the protrusion area and it is daubed.

In the variable magnification origin setting section SC72, the "center of trimming frame", "apex of the rectangle", and "automatic switching" buttons are prepared, and the origins P1 - P5 of the enlargement/reduction in Figs. 11 and 12 can be selected, and designated. In the "center of trimming frame", the center of gravity P5 in Figs. 11 - 14 is set as the origin, and in the "apex of the rectangle", the apex corresponding to the moving point at the time of the variable magnification rotation designated by the cursor in apexes P1 - P4 in Figs. 11 - 14, is set as the origin. That is, the operation of the variable magnification or rotation is conducted by moving one of apexes when the cursor is put on the apex of the rectangle as the trimming area or the rectangle as the circumscribe frame, and drugged from the apex. The origin at the time of the variable magnification or rotation is automatically set to the apex positioned in the opposite angle of the moving apex which is the cursor position.

The "automatic switching" is the button to designate a mode in which the machine automatically conducts the change of the origin, and in this mode, when the trimming area protrudes from the existing range of the image information by the variable magnification or rotation, the switching of the origin is conducted, and the variable magnification or rotation by which the protrusion is not generated, is conducted. The automatic switching is effective when it is used in the case where it is collided with another image by the enlargement or rotation, when the image synthesis is conducted except for the case where the image is protruded outside by the variable magnification or rotation as described above.

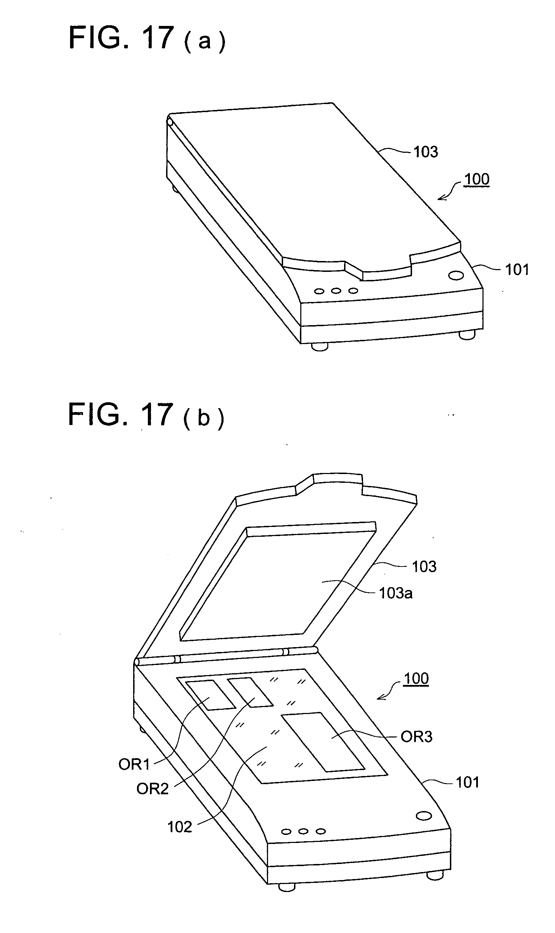

The present invention provides a new image reading apparatus. The conventional image reading apparatus 100 consists of the apparatus main body 100, and a platen cover 103 as the document cover hinged to the main body 100. The apparatus main body 100 has a platen glass 102. As shown in Fig. 17(b), it is structured in such a manner that the platen glass 103 as the document table has an area on which several sheets of L-size photograph to ten and several sheets can be simultaneously placed, and photographic prints OR1, OR2, OR3 are pressed by a cushion layer 103a provided on the platen cover 103. Generally, the platen cover 103 is formed of no-bendable rigid plate, and by the flexibility of the cushion layer 103a, the photographic prints OR1 - OR3 are pressed to the platen glass 102, and the document is held on the screen.

However, in the conventional image reading apparatus, there are many cases where it is difficult that the photographic prints OR1 - OR3 are set to desired position. That is, in many cases, because the photographic print has a tendency to be curled, it is not only difficult that the document is arranged at the correct position on the platen glass 102, but, after the photographic print is placed, in the process in which the platen cover 103 is closed, the document is also moved and dislocated from the set position.

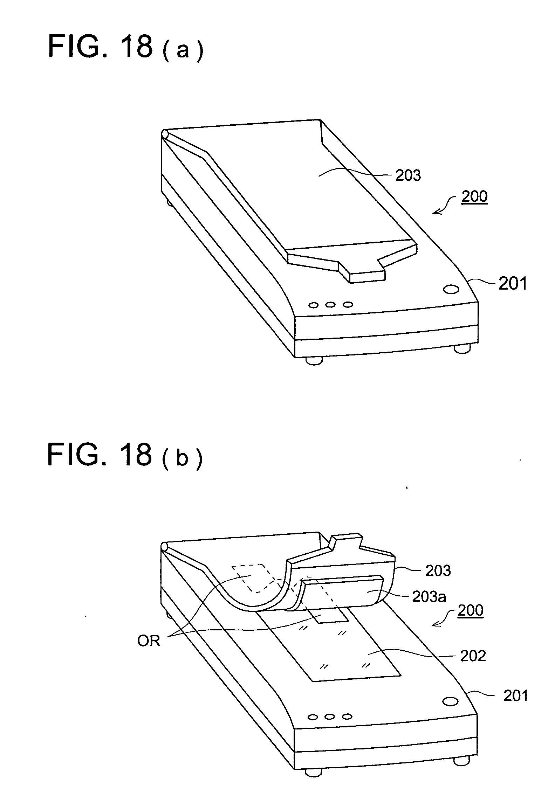

An example of the embodiment of the present invention shown in Fig. 18, the image reading apparatus 200 is structured by the apparatus main body 201 and the platen cover 203 as the document cover, and the cushion layer 203a is provided on a side opposite to the platen glass 202 (document table), and structured in such a manner that it can be bent.

The platen cover 203 is hinged to the apparatus main body 201 on the portion, and can be opened and closed, and by adding the force, it can be bent as shown in Fig. 18(b).

When the photographic print OR is placed on the platen glass 203, as shown in Fig. 18(b), the platen cover 203 is partially pressed to the platen glass 202 every when one sheet is placed, and the photographic print OR is fixed. When the placement of all photographic prints OR is completed, whole surface of the platen cover 203 is brought into contact with the platen glass 202. The platen cover 203 has the flexibility and the elasticity, and when it is released from the bending force, it becomes plan-like as shown in Fig. 18(a).

The platen cover 203 having such a flexibility and elasticity can be structured by a cover which has the elastic resin material or thin steel plate as a core material, and whose frame is formed of soft resin.

As described above, because the photographic print has a tendency to be curled, it is desirable that the document is pressed by a force of a certain degree.

Therefore, for the platen cover 203, a cover having a mass of not smaller than 15 g and not larger than 100 g per 100 cm² is used. When the mass is lower than 15 g, there is a possibility that the platen cover 203 is floated when hand is separated from the platen cover 203, and when the mass is over 100 g, there is a possibility that handling is interfered with it.

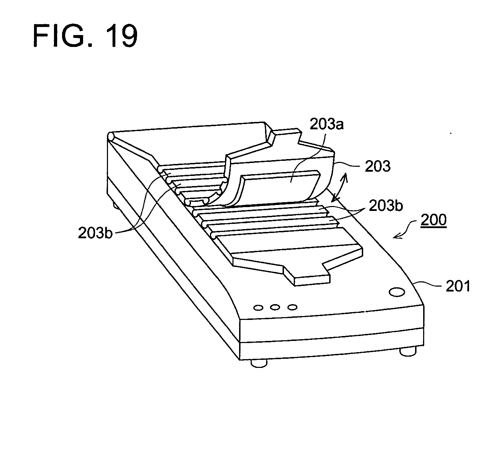

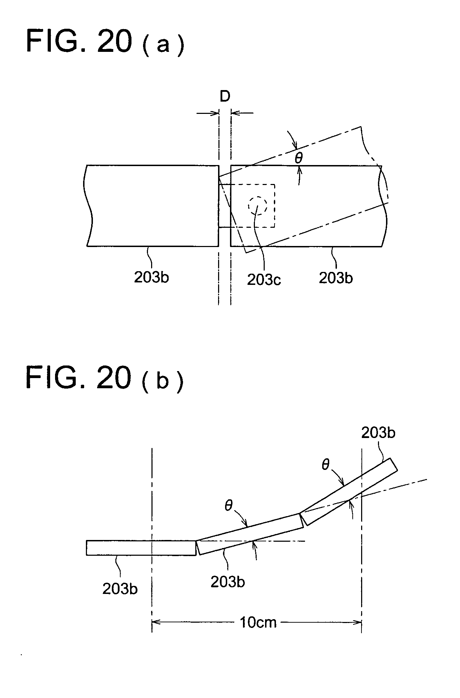

Fig. 19 shows another example of the embodiment of the present invention, and in this example, the platen cover 203 is structured by a plate-like member to which many joint portions are combined. Each joint portion is structured as shown in Fig. 20. That is, the joint portion 203b, 203b are connected by a connection axis 203c provided in the joint portion 203b, and a gap D between the joint portions 203b and 203b is set in such a manner that the joint portion 203b is not bent more than an allowed angle to the joint portion 203b. Hereby, the handling property when the size of the platen cover 203 is not larger than a size of a certain degree, is increased. At need, it is also possible that the allowable angle is set very large (that is, the limit angle is almost lost), and in the case of a large type machine which requires a very large platen cover, such a set is preferable.

When many joint portions 203b in Fig. 19 are connected in this manner, the platen cover 203 is formed into a bendable one.

It is preferable that the allowable angle is not smaller than ± 30° per 10 cm in an arbitrary position in the range of the document press surface of the platen cover 203. An angle θ between adjoining joint portions 203b is not always equal to the above-described range, and as shown in Fig. 2(b), in the position separated by 10 cm, it is allowed when the angle between joint portions 203 is in the above-described range, and it is allowed when the total of angles θ between adjoining joint portions are in the above-described range. The angle θ is determined when an interval D between joint portions 203b shown in Fig. 20(a), is appropriately set.

This is for the reason to satisfy a desirable mode for use that, in many number of photographic prints, one side is about 10 cm, and it is preferable that it is bent in the range of one sheet of photographic print.

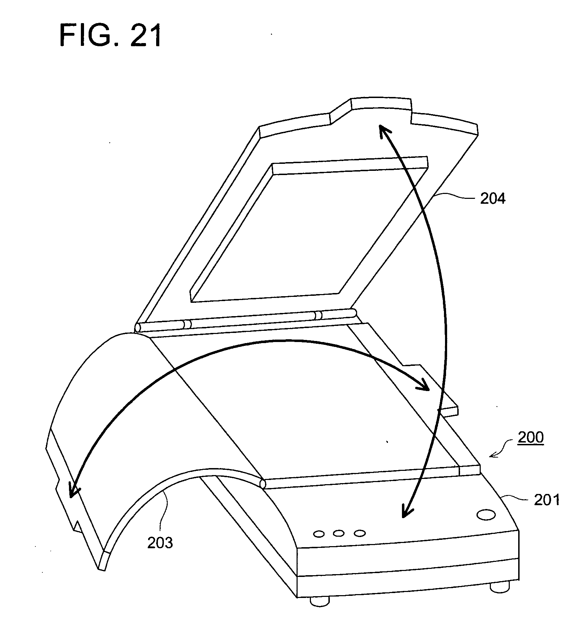

Fig. 21 shows yet another example of the embodiment of the present invention. In this example, the platen cover is structured by 2 sheets. The platen cover 203 to directly press photographic prints OR1 - OR3 is the same as the cover shown in Fig. 19, 20, and is formed of flexible plate material. The platen cover 204 as the press cover to press the platen cover 203, is formed of a rigid plate.

When photographic prints are located and positioned by platen covers 203, 204 shown in Fig. 21, photographic prints OR1 - OR3 are provisionally pressed by the platen cover 204, and in a stage in which they can be positioned, when the platen cover 203 is pressed by the platen cover 204, dislocation of the document can be lost.

According to the invention of any one of items 1 - 7, 13 - 19, 25 - 31, because a plurality of cut-out areas are arranged and displayed, it is not influenced with the peripheral condition of the cut out area, the cut-out area can be observed, and the image processing in which the details of the operator's intention are correctly reflected, can be conducted.

According to the invention of items 2, 14 or 26, because images which are arranged and displayed, can be individually adjusted, the individual image can be finely adjusted like as it can be adjusted being compared to another image, and a image group of the image quality having the continuity can be obtained.

According to the invention of items 3, 15 or 27, even when a plurality of desired areas are overlapped in a portion, because the overlapped area can be taken into each desired area, the appropriate trimming areas can be set for images having various screen structure.

According to the invention of items 4, 5, 16, 17, 28 or 29, even when the image information is obtained from a plurality of image sources such as a combination layout print, and duplicate-processed, because the obtained images can be arranged and observed, the adjustment of individual image, image quality adjustment as a whole, and image edit can be conducted as the operator desires, and the uniform image quality and stable image can be obtained.

According to the invention of items 6, 7, 18, 19, 30 or 31, the image from different image source such as a case where the image of the image information obtained from each kind of storage media and the image of the image information from the photographic film, or photographic print can be simultaneously observed in parallel, can also be finished into the image with the uniformity.

According to any one of inventions of items 8 - 11, 20 - 23, 32 - 35, in the image synthesis by which a plurality of trimming images are combined, or in the image edit such as image paste by which the trimming image is inserted into another image, the edit technology is enriched in such a manner that the synthesis method can flexibly cope with the image structure of diversified various paste destinations.

According to invention of item 12, 24 or 36, even when a part of image is lacked, because various image processing technologies such as a method by which the necessary part can be enlarged, or the necessary image rotation can be conducted, can be used, the utility value of the trimming function is increased, and the user friendly trimming function is realized.

According to the invention of any one of items 37 - 39, even in the case of photographic documents in which there are many small size prints such as L-size, they can be set to correct positions by a simple operation, and further, there is no float-up also by a curl which is many in the photographic print, and they can be held on the document table with good flatness.

According to the invention of item 39, even when the lift of the document is strong, the lift can be finely prevented.

## Claims

1. An image processing method comprising steps of:
obtaining input image data representing an image on one frame;
displaying the obtained input image data on a first preview screen so that the image on one frame is displayed as an image on the first preview screen;
setting plural image areas in the displayed image on the first preview screen so that plural sub images are separately enclosed with the plural image areas in the displayed image on the first preview screen,
extracting plural sub image data corresponding to the plural sub images enclosed with the plural image areas from the input image data, and
displaying the extracted plural sub image data on a second preview screen so that the plural sub images are separately displayed in plural frames on the second preview screen.

2. The image processing method of claim 1, further comprising step of:
image-processing the extracted each image data based on the image quality adjustment value of respective the image data.

3. The image processing method of claim 1, wherein the plurality of image areas can be set by overlapping.

4. The image processing method of claim 1, wherein the second preview screen can arrange and display an image of the image data different from the input image data, in addition to the image of the area which is extracted from the image displayed on the first preview image screen.

5. The image processing method of claim 1, further comprising steps of:
displaying the obtained input image data on a third preview screen so that image on plural frames is displayed as an image on the third preview screen,
selecting an image in the displayed images on plural frames so as to trimming the image data,
extracting the selected images, and
displaying the extracted images in addition to the image in the set plurality of areas which is arranged on the second preview screen.

6. An image processing method comprising steps of:
obtaining input image data representing an image on one frame, wherein the image data are inputted from the plural image scanning device;
displaying the obtained input image data on a first preview screen so that the image on one frame is displayed as an image on the screen;
image-processing the extracted each image data based on the image quality adjustment value of respective the image data.

7. The image processing method of claim 6, wherein the image data of the adjusted plurality of images is stored in a single image recording medium.

8. An image processing method for trimming an image; comprising steps of;
obtaining input image data representing an image on one frame,
displaying an image of the obtained input image data and a frame of trimming area which is defined in a rectangle shape, and
designating an area of the frame whose shape is similar to the rectangle, and whose dimension is different from it for trimming,
wherein the origin for adjusting the dimension of the area can be designated to any one of each of apexes of the rectangle and the center of gravity of the rectangle.

9. An image processing method for trimming an image; comprising steps of;
obtaining input image data representing an image on one frame,
displaying an image of the obtained input image data on and a frame of trimming area which is defined in a predetermined shape, and
designating an area of the frame whose shape is similar to the predetermined shape, and whose dimension is different from it for trimming,
wherein the origin for adjusting the dimension of the area can be designated to any one of each of apexes of the rectangle which circumscribes the predetermined shape, and the center of gravity of the rectangle.

10. The image processing method of claim 8, wherein the trimming area is set by rotating the rectangle, the origin for rotating the area can be set to any one of each of apexes of the rectangle and the center of gravity of the rectangle.

11. The image processing method of claim 9, wherein the trimming area is set by rotating the predetermined shape, and the trimming processing is conducted, the origin for rotating the area can be designated to any one of each of apexes of the rectangle circumscribing the shape and the center of gravity of the rectangle.

12. The image processing method of claim 8, comprising step of;
switching any one of a first trimming area setting mode and a second trimming area setting mode, wherein the first trimming area setting mode is allowed that an area after the trimming processing protrudes from the area of the input image data, the second area setting mode is restricted that an area after the trimming processing protrudes from the area of the input image data.

13. An image processing apparatus comprising:
a obtaining device to obtain input image data representing an image on one frame;
a displaying device to display the obtained input image data on a first preview screen so that the image on one frame is displayed as an image on the first preview screen;
a setting device to set plural image areas in the displayed image on the first preview screen so that plural sub images are separately enclosed with the plural image areas in the displayed image on the first preview screen,
a extracting device to extract plural sub image data corresponding to the plural sub images enclosed with the plural image areas from the input image data, and
a displaying device to display the extracted plural sub image data on a second preview screen so that the plural sub images are separately displayed in plural frames on the second preview screen.

14. The image processing apparatus of claim 13, further comprising:
an image-processing device to process the extracted each image data based on the image quality adjustment value of respective the image data.

15. The image processing apparatus of claim 13, wherein the plurality of image areas can be set by overlapping.

16. The image processing apparatus of claim 13, wherein the second preview screen can arrange and display an image of the image data different from the input image data, in addition to the image of the area which is extracted from the image displayed on the first preview image screen.

17. The image processing apparatus of claim 13, further comprising:
a displaying device to display the obtained input image data on a third preview screen so that image on plural frames is displayed as an image on the third preview screen,
a selecting device to select an image in the displayed images on plural frames so as to trimming the image data,
a extracting device to extract the selected images, and
a displaying device to display the extracted images in addition to the image in the set plurality of areas which is arranged on the second preview screen.

18. An image processing apparatus comprising:
a obtaining device to obtain input image data representing an image on one frame, wherein the image data are inputted from the plural image scanning device;
a displaying device to the display the obtained input image data on a first preview screen so that the image on one frame is displayed as an image on the screen;
an image-processing device to process the extracted each image data based on the image quality adjustment value of respective the image data.

19. The image processing apparatus of claim 18, wherein the image data of the adjusted plurality of images is stored in a single image recording medium.

20. An image processing apparatus for trimming an image; comprising;
a obtaining device to obtain input image data representing an image on one frame,
a displaying device to display an image of the obtained input image data and a frame of trimming area which is defined in a rectangle shape, and
a designating device to designate an area of the frame whose shape is similar to the rectangle, and whose dimension is different from it for trimming,
wherein the origin for adjusting the dimension of the area can be designated to any one of each of apexes of the rectangle and the center of gravity of the rectangle.

21. An image processing apparatus for trimming an image; comprising;
a obtaining device to obtain input image data from the pre-scan by the image scanning device,
a displaying to display an image of the obtained input image data and a frame of trimming area which is defined in a predetermined shape, and
a designating to designate an area of the frame whose shape is similar to the predetermined shape, and whose dimension is different from it for trimming,
wherein the origin for adjusting the dimension of the area can be designated to any one of each of apexes of the rectangle which circumscribes the predetermined shape, and the center of gravity of the rectangle.

22. The image processing apparatus of claim 20, wherein the trimming area is set by rotating the rectangle, the origin for rotating the area can be set to any one of each of apexes of the rectangle and the center of gravity of the rectangle.

23. The image processing apparatus of claim 21, wherein the trimming area is set by rotating the predetermined shape, and the trimming processing is conducted, the origin for rotating the area can be designated to any one of each of apexes of the rectangle circumscribing the shape and the center of gravity of the rectangle.

24. The image processing apparatus of claim 20, comprising;
a switching device to switch any one of a first trimming area setting mode and a second trimming area setting mode, wherein the first trimming area setting mode is allowed that an area after the trimming processing protrudes from the area of the input image data, the second area setting mode is restricted that an area after the trimming processing protrudes from the area of the input image data.

25. An image processing program to control a computer to function as a image processing device, comprising;
a obtaining section to obtain input image data representing an image on one frame;
a displaying section to display the obtained input image data on a first preview screen so that the image on one frame is displayed as an image on the first preview screen;
a setting section to set plural image areas in the displayed image on the first preview screen so that plural sub images are separately enclosed with the plural image areas in the displayed image on the first preview screen,
a extracting section to extract plural sub image data corresponding to the plural sub images enclosed with the plural image areas from the input image data, and
a displaying section to display the extracted plural sub image data on a second preview screen so that the plural sub images are separately displayed in plural frames on the second preview screen.

26. The image processing program of claim 25, further comprising:
an image-processing section to process the extracted each image data based on the image quality adjustment value of respective the image data.

27. The image processing program of claim 25, wherein the plurality of image areas can be set by overlapping.

28. The image processing program of claim 25, wherein the second preview screen can arrange and display an image of the image data different from the input image data, in addition to the image of the area which is extracted from the image displayed on the first preview image screen.

29. The image processing program of claim 25, further comprising;
a displaying section to display the obtained input image data on a third preview screen so that image on plural frames is displayed as an image on the third preview screen,
a selecting section to select an image in the displayed images on plural frames so as to trimming the image data,
a extracting section to extract the selected images, and
a displaying section to display the extracted images in addition to the image in the set plurality of areas which is arranged on the second preview screen.

30. An image processing program to control a computer to function as a image processing device, comprising;
a obtaining section to obtain input image data representing an image on one frame, wherein the image data are inputted from the plural image scanning device;
a displaying section to the display the obtained input image data on a first preview screen so that the image on one frame is displayed as an image on the screen;
an image-processing section to process the extracted each image data based on the image quality adjustment value of respective the image data.

31. The image processing program of claim 30, wherein the image data of the adjusted plurality of images is stored in a single image recording medium.

32. An image processing program to control a computer to function as a image trimming device, comprising;
a obtaining section to obtain input image data representing an image on one frame,
a displaying section to display an image of the obtained input image data and a frame of trimming area which is defined in a rectangle shape, and
a designating section to designate an area of the frame whose shape is similar to the rectangle, and whose dimension is different from it for trimming,
wherein the origin for adjusting the dimension of the area can be designated to any one of each of apexes of the rectangle and the center of gravity of the rectangle.

33. An image processing program to control a computer to function as a image trimming device, comprising;
a obtaining section to obtain input image data representing an image on one frame,
a displaying section to display an image of the obtained input image data and a frame of trimming area which is defined in a predetermined shape, and
a designating section to designate an area of the frame whose shape is similar to the predetermined shape, and whose dimension is different from it for trimming,
wherein the origin for adjusting the dimension of the area can be designated to any one of each of apexes of the rectangle which circumscribes the predetermined shape, and the center of gravity of the rectangle.

34. The image processing program of claim 32, wherein the trimming area is set by rotating the rectangle, the origin for rotating the area can be set to any one of each of apexes of the rectangle and the center of gravity of the rectangle.

35. The image processing program of claim 33, wherein the trimming area is set by rotating the predetermined shape, and the trimming processing is conducted, the origin for rotating the area can be designated to any one of each of apexes of the rectangle circumscribing the shape and the center of gravity of the rectangle.

36. The image processing program of claim 32, comprising;
a switching section to switch any one of a first trimming area setting mode and a second trimming area setting mode, wherein the first trimming area setting mode is allowed that an area after the trimming processing protrudes from the area of the input image data, the second area setting mode is restricted that an area after the trimming processing protrudes from the area of the input image data.

37. An image reading apparatus having the document table and document cover, comprising;
a document cover has elasticity and plasticity, and mass per 100 cm² is not smaller than 15 g, and not larger than 100 g.

38. An image reading apparatus having the document table and document cover, comprising
a document cover is formed of a plate-like member to which a plurality of joint portions are connected, and the plurality of joint portions can bend not smaller then ± 30° between terminals in the range separated by 10 cm of one direction, and the mass of the document cover per its 100 cm² is not smaller than 15 g and not larger than 100 g.

39. The image reading apparatus of claim 37, wherein the document cover has a press cover formed of plate member having the rigidity to press the document.
